(19) Europäisches Patentamt
European Patent Office
Office européen des brevets

(11) **EP 3 711 432 B1**

(12) **EUROPEAN PATENT SPECIFICATION**

(45) Date of publication and mention
of the grant of the patent:
**12.07.2023 Bulletin 2023/28**

(21) Application number: **18804602.3**

(22) Date of filing: **16.11.2018**

(51) International Patent Classification (IPC):
*H04W 74/08* (2009.01)   *H04L 5/00* (2006.01)

(52) Cooperative Patent Classification (CPC):
**H04W 74/0833; H04L 5/0053;** H04L 5/0007

(86) International application number:
**PCT/EP2018/081619**

(87) International publication number:
**WO 2019/097016 (23.05.2019 Gazette 2019/21)**

(54) **WINDOW LENGTH OF RANDOM ACCESS RESPONSE IN NEW RADIO**

FENSTERLÄNGE EINER DIREKTZUGRIFFSANTWORT IN NEW RADIO

LONGUEUR DE FENÊTRE DE RÉPONSE D'ACCÈS ALÉATOIRE EN NOUVELLE RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2017 US 201762587328 P**

(43) Date of publication of application:
**23.09.2020 Bulletin 2020/39**

(73) Proprietor: **Telefonaktiebolaget LM Ericsson (publ)**
**164 83 Stockholm (SE)**

(72) Inventors:
• **IRUKULAPATI, Naga Vishnu Kanth**
  **421 35 Västra Frölunda (SE)**
• **SAHLIN, Henrik**
  **435 41 Mölnlycke (SE)**
• **REIAL, Andres**
  **211 17 Malmö (SE)**
• **CHRISTOFFERSSON, Jan**
  **975 61 Luleå (SE)**

(74) Representative: **Zacco Sweden AB**
**P.O. Box 5581**
**Löjtnantsgatan 21**
**114 85 Stockholm (SE)**

(56) References cited:
• **NOKIA ET AL: "Remaining details on PRACH procedure", 3GPP DRAFT; R1-1718303_REMAINING DETAILS ON RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 8 October 2017 (2017-10-08), XP051341485, Retrieved from the Internet: URL:http://www.3gpp.org/ftp/Meetings_3GPP_ SYNC/RAN1/Docs/ [retrieved on 2017-10-08]**
• **SAMSUNG: "4-step RACH procedure discussion", 3GPP DRAFT; R1-1713562, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czechia; 20170822 - 20170827 20 August 2017 (2017-08-20), XP051316362, Retrieved from the Internet: URL:http://www.3gpp.org/ftp/Meetings_3GPP_ SYNC/RAN1/Docs/ [retrieved on 2017-08-20]**

- RAN WG1: "LS on NR initial access and mobility", 3GPP DRAFT; R4-1710118_R1-1715316_LS TO RAN4 ABOUT NR INITIAL ACCESS AND MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG4, no. Dubrovnik, Croatia; 20171009 - 20171013 8 October 2017 (2017-10-08), XP051345020, Retrieved from the Internet: URL:http://www.3gpp.org/ftp/Meetings_3GPP_ SYNC/RAN4/Docs/ [retrieved on 2017-10-08]
- CATT: "Further details on NR 4-step RA Procedure", 3GPP DRAFT; R1-1717803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20171009 - 20171013 3 October 2017 (2017-10-03), XP051352758, Retrieved from the Internet: URL:http://www.3gpp.org/ftp/tsg_ran/WG1_RL 1/TSGR1_90b/Docs/ [retrieved on 2017-10-03]
- ERICSSON: "Remaining details on NR-RACH configurations and formats", 3GPP DRAFT; R1-1716154_REMAINING DETAILS ON NR-RACH CONFIGURATIONS AND FORMATS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Nagoya, Japan; 20170918 - 20170921 17 September 2017 (2017-09-17), XP051339612, Retrieved from the Internet: URL:http://www.3gpp.org/ftp/Meetings_3GPP_ SYNC/RAN1/Docs/ [retrieved on 2017-09-17]

**Description**

FIELD

The present disclosure relates to wireless communications, and in particular, to configuring window length of a Random Access Response (RAR).

INTRODUCTION

A random access (RA) procedure is a function in a cellular system. In Long Term Evolution (LTE), a wireless device (i.e., User equipment (UE)) that wants to access the network initiates the random access procedure by transmitting a preamble (Msg1) in the uplink on the Physical Random Access Channel (PRACH). A network node (gNB, next generation Node B, or TRP, Transmission and Reception Point i.e. a base station, access node) receives the preamble, detects the random-access attempt and responds in the downlink by transmitting a random access response (RAR, Msg2). The RAR includes an uplink scheduling grant for the wireless device in order to continue the random access procedure by transmitting a following subsequent message in the uplink (Msg3) for terminal identification.

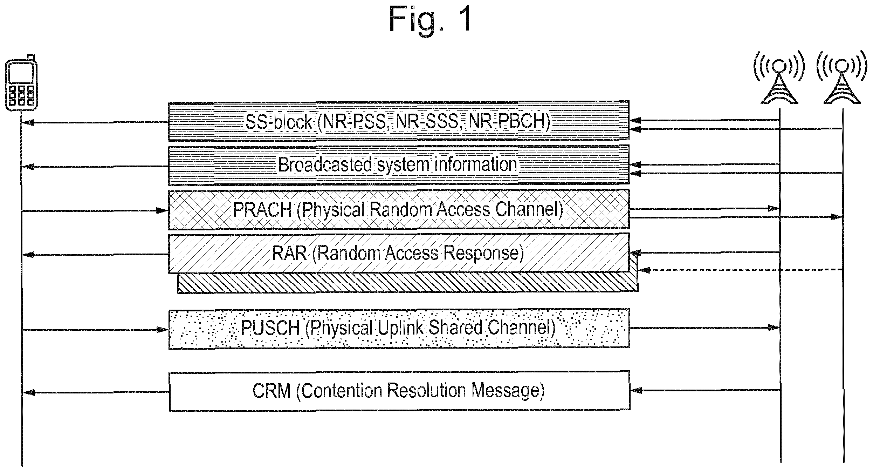

A similar procedure illustrated in FIG. 1 is envisioned for New Radio (NR) except that, before transmission of the PRACH preamble, the wireless device receives both a set of synchronization signals and configuration parameters on a broadcast channel in an SS-block (e.g., PSS, SSS, PBCH), possibly complemented with configuration parameters received on yet another channel.

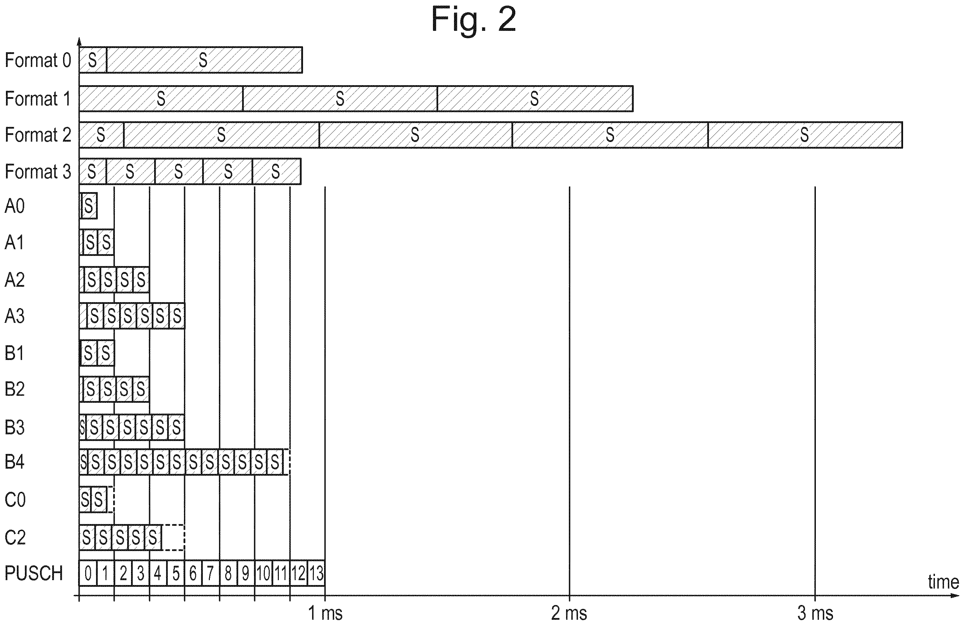

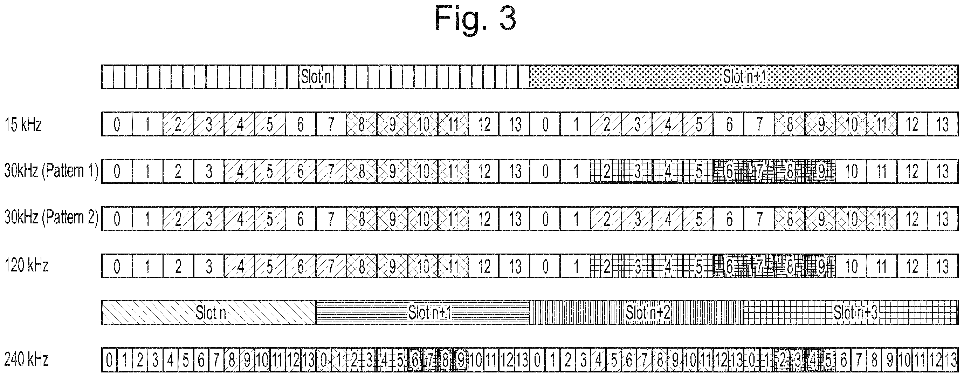

FIG. 2 is a diagram of the PRACH preamble formats. FIG. 3 is a diagram illustrating the positions of SSBs within slots.

In LTE, the RAR window length can be configured between 2 subframes and up to 10 subframes as defined by parameter ra-ResponseWindowSize described in Section 6.3.2 of 3GPP TS 36.331. However, in NR, this concept needs to be reevaluated (1) since the periodicity of PRACH preamble might be different than in LTE, and (2) to support low latency use case. There are two different scenarios where a long RAR window length is not desirable. This should be taken into consideration when there is a desire to have a configurable case of low latency support in these scenarios.

When the RAR is not received by the wireless device, the wireless device follows power ramping, as is known in the art. If the RAR window is too long, this power ramping procedure will impact the overall time for the random access latency. This power ramping occurs when the PRACH preamble must be retransmitted due to no RAR having been received by the wireless device.

When there is no beam correspondence at the wireless device, then the wireless device might need to do a transmit beam-sweeping of PRACH preambles. A retransmission of PRACH preambles for Contention Based Random Access Procedure (CBRA) is only allowed after the end of the RAR window. This might take a lot of time and is not desirable for low latency applications.

A document titled "Remaining details on PRACH procedure" RAN WG1, Prague, Czech Republic, by NOKIA et. al. describes the 4-step random access procedure and particularly the Random Access Response.

SUMMARY

The invention is defined by the independent claims. Further, embodiments of the invention are defined by the claims. Moreover, examples, embodiments and descriptions, which are not covered by the claims are presented not as embodiments of the invention, but as background art or examples useful for understanding the invention. Some embodiments advantageously provide methods, and apparatuses for configuring window length of a Random Access Response (RAR) based on a fraction and/or multiple of a slot length. In some non-limiting embodiments, an example of a slot length is 0.5 ms.

In one embodiment a wireless device is provided. The wireless device is configured to communicate with a network node. The wireless device includes a radio interface and processing circuitry configured to implement a Random Access Response, RAR, window. A time length of the RAR window being configurable to correspond to a fraction or multiple of a slot in the frame. The radio interface and the processing circuit are further configured to receive a RAR using the implemented RAR window.

In one embodiment a method implemented in a wireless device is provided. The wireless device is configured to communicate with a network node. The method includes implementing a Random Access Response, RAR, window. A time length of the RAR window being configurable to correspond to a fraction or multiple of a slot in the frame. The method further includes receiving a RAR using the implemented RAR window.

In one embodiment a network node is provided. The network node is configured to communicate with a wireless device. The network node inlcudes a radio interface and processing circuitry configured to transmit a Random Access Response, RAR, within a RAR window. A time length of the RAR window having been configured to correspond to a fraction or multiple of a slot in the frame.

In one embodiment a method implemented in a network node is provided. The network node is configured to communicate with a wireless device. The method includes transmitting a Random Access Response, RAR, within a RAR window. A time length of the RAR window having been configured to correspond to a fraction or multiple of a slot in the frame.

The configuration of the time length of the RAR window is not without problems. In one or more embodiments, configuration of time length of the RAR window is selected by the network node, e.g., gNB. The timing between PRACH preamble and start of RAR window is expected to be much lower in New Radio (NR) as compared to Long Term Evolution (LTE), by specifying a value of X which is significantly lower than 3 subframe. A more relevant value of X might be in the order of one OFDM symbol.

Having a 2 ms length (i.e., 2 subframes for 30 KHz) for a RAR window might be too long for low latency application. This may be because the wireless device is not allowed to transmit any new PRACH preamble (msg1) before the end of the RAR window. Having the RAR window configuration occur on the gNB processing side might not be the best solution for NR due to latency constraints. Furthermore, the periodicity of PRACH preamble might be different than in LTE.

The disclosure solves at least one or more of these problems by configuring the RAR window length in terms of a fraction or a multiple of a slot. According to the present invention, the smallest length of the time length of the RAR window is less than a slot duration. In one or more embodiments, the length of the slot is based on RAR numerology. In one embodiment, this configuration of minimum RAR window is dependent on PRACH preamble format. The RAR window configuration provides one or more advantages. For example, very low latency of the RACH procedure can be achieved based on the teachings of this disclosure, for one or more PRACH preamble formats, and with RAR window length being a fraction and/or a multiple of a slot. The following are some example use cases that achieve very low latency in accordance with the teachings of the disclosure:

- The length of the RAR window in seconds will vary with the length of the slot. Thus, the longer sub-carrier spacing selected for RAR, and the shorter the RAR window will be in terms of seconds. However, the same length in terms of slots can be used, such that the capacity, in terms of maximum possible RAR transmissions per PRACH preamble, is constant.

- When the RAR is not received by the wireless device, the wireless device follows power ramping. If the RAR window is too long, this will impact the overall time for the RACH latency, especially if several PRACH preambles should be sent before the PRACH preamble is detected in network node, e.g., gNB, and a RAR is received in wireless device. A RAR window of ½ slot enables fast power ramping

- A different example use case is when there is no beam correspondence at the wireless device. Then the wireless device performs a transmit beam-sweeping of PRACH preambles, which might take a lot of time and is therefore not desirable for low latency applications, especially if the RAR window length is long.

BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:

FIG. 1 is a diagram of an initial access procedure;
FIG. 2 is a diagram of PRACH preamble formats;
FIG. 3 is a diagram of positions of SSBs within slots;
FIG. 4 is a schematic diagram of an exemplary network architecture illustrating a communication system connected via an intermediate network to a host computer according to the principles in the present disclosure;
FIG. 5 is a block diagram of a host computer communicating via a network node with a wireless device over an at least partially wireless connection according to the present disclosure;
FIG. 6 is a block diagram of an alternative embodiment of a network node according to the present disclosure;
FIG. 7 is a block diagram of an alternative embodiment of a wireless device according to the present disclosure;
FIGS. 8-11 are flow charts illustrating exemplary methods implemented in a communication system including a host computer, a network node and a wireless device according to the present disclosure;
FIG. 12 is a flowchart of an exemplary process in a network node for transmitting a RAR within a RAR window according to the present disclosure;
FIG. 13 is a flowchart of an exemplary process in a wireless device for implementation a RAR window according to the present disclosure;

FIG. 14 is a flowchart of an exemplary process in a wireless device for determining a time length of a RAR window in accordance with the present disclosure; and

FIG. 15 is a block diagram of SSBs positions in accordance with the principles of the disclosure.

DETAILED DESCRIPTION

Before describing in detail exemplary embodiments, it is noted that the embodiments reside primarily in combinations of apparatus components and processing steps related to configuring time length of a Random Access Response (RAR) window for receiving and/or attempting to receive a RAR. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

In LTE, the RAR window length can be configured between 2 subframes up to 10 subframes as described in Third Generation Partnership Project (3GPP) Technical Specification (TS) 36.331, Section 6.3.2. A subframe is 1 ms in both LTE and NR. The RAR window is defined for LTE to start 3 subframes after the end of the PRACH preamble as described in 3GPP TS 36.321, version 12.2.1, section 5.1.4.

In agreements in Radio Access Network (RAN) 1#90:

- At least for initial access, RAR is carried in NR Physical Downlink Shared Channel (NR-PDSCH) scheduled by NR Physical Downlink Control Channel (NR-PDCCH) in CORESET configured in RACH configuration

    o Note: CORESET configured in RACH configuration can be same or different from CORESET configured in NR Physical Broadcast Channel (NR-PBCH)

- For single Msg1 RACH, the RAR window starts from the first available CORESET after a fixed duration from the end of Msg1 transmission

    o The fixed duration is X T_s

    ∘ X is the same for all RACH occasions

    o For Further Study/Research (FFS) whether CORESET starting position is aligned with slot boundary

    ∘ FFS: the value of X

    ∘ FFS: whether X is frequency range dependent

- For a single Msg1 RACH from wireless device,

    o The size of a RAR window is the same for all RACH occasions and is configured in RMSI

    o RAR window could accommodate processing time at network node.

        ▪ Maximum window size depends on worst case network node delay after Msg1 reception including processing delay, scheduling delay, etc

        ▪ Minimum window size depends on duration of Msg2 or CORESET and scheduling delay

- FFS: multiple Msg1 RACH case if supported

In agreements in RAN1 NR AdHoc #3:

- For RAR, X can be supported for the timing gap between the end of MSg1 transmission and the starting position of the CORESET for RAR

    o Value of X = ceiling(∆/(symbol duration))*symbol duration, where the symbol duration is based on the RAR numerology

- Where Δ is to accommodate sufficient time for wireless device Tx-Rx switching if needed (e.g., for TDD)

  - Note: wireless device Tx-Rx switching latency is specified in RAN4

In agreements in RAN1#90bis:

- For contention-based random procedure, after the wireless device selects one PRACH transmission occasion for Msg1 transmission, the wireless device is not allowed to select another PRACH transmission occasion before the expiration of RAR window for the same Msg 1 transmission in 3GPP Release-15

According to the above agreement, the processing time at the network node should be accommodated in the RAR window length, since this processing time might only be partly included in X. This will impact the maximum RAR window length.

- The following concepts are also different compared to LTE, which will impact the RAR window length:

  ○ Short PRACH preamble formats of only 1 OFDM symbol.

  ○ Periodicity of PRACH configuration

  - LTE: Configurable between every subframe up to every 2nd frame

  - NR: Still ongoing discussion: for example, configurable between every subframe up to every 4th, 8th or 16th frame

  ○ Number of PRACH preambles per cell in NR might be configured to be much higher than in LTE, which might impact capacity of RAR (i.e., how many RARs can be send within RAR window at a time). Still ongoing discussions in 3GPP

  ○ Start of the RAR window

  - In LTE:

  • 3 subframes after end of RACH preamble transmission

  • Network node processing time is also accounted within start of RAR window

  - In NR:

  • accounting only for the UL-DL switch

  • Network node, e.g., gNB, processing time should be accounted for in length of RAR window

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or a wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another wireless device over radio signals, such as wireless device. The wireless device may also be a radio communication device, target device, device to device (D2D) wireless device, machine type wireless device or wireless device capable of machine to machine communication (M2M), low-cost and/or low-complexity wireless device, a sensor equipped with wireless device, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, access point, radio access point, Remote Radio Unit (RRU) Remote Radio Head (RRH).

Note that although terminology from one particular wireless system, such as, for example, 3GPP LTE, may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

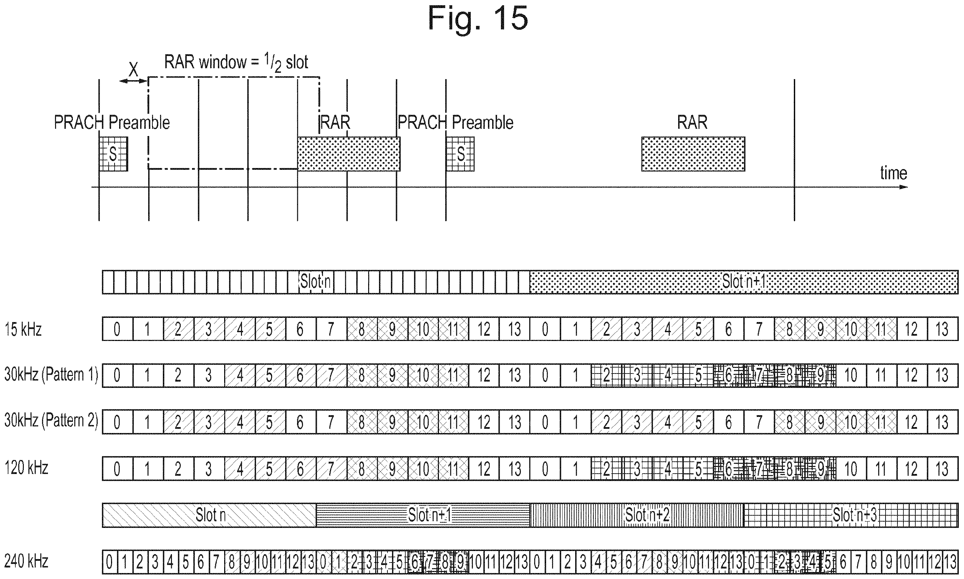

In some embodiments the RAR window is defined as a time length relative to the network node receiving the (P)RACH preamble until the RAR is transmitted by the network node to the wireless device or the that the RAR is received by the wireless device. In some further the embodiments the start of the RAR window is postponed relative to receipt of RACH preamble (Msg 1), such as for example the case for LTE where the RAR window is defined to start 3 subframes after the end of the RACH preamble. In some further embodiments the RAR window length is shift such the end of the RAR window does not exactly coincide with the RAR transmission to the wireless device. For the end to of the RAR window may be shifted one or more OFDM symbols relative to the RAR transmission, this is schematically illustrated in Fig 15. The RAR window can in some embodiments be defined as a time length or as fractions or multiples of slots or subframes

In illustrative embodiments, once the Random Access Preamble is transmitted and regardless of the possible occurrence of a measurement gap, the wireless device shall monitor the PDCCH for RAR(s) identified by the RA-RNTI, in the RAR window which starts at the slot that contains the end of the preamble transmission plus three slots and has length RAR window length. It means the earliest time when the network can transmit the RACH response is three slots later from the end of RACH Preamble. Then what is the latest time the network can transmit RAR is determined by the RAR window length. If in the illustrative example the window size is a number between 0 and 10 in the unit of slots. This would mean that the maximum time difference between the end of RACH preamble and RAR is 12 slots.

One or more embodiments provide a configuration of a time window for a RAR window to be defined in terms of a fraction or a multiple of a slot. According to the present invention, the smallest length of the fraction or multiple of the slot is less than a slot duration. In one or more embodiments, the length of the slot is based on RAR numerology.

RAR numerology may include but is not limited to sub-carrier spacing, cyclic prefix, and/or slot duration. In one or more embodiments, this configuration of minimum RAR window is dependent on PRACH preamble format.

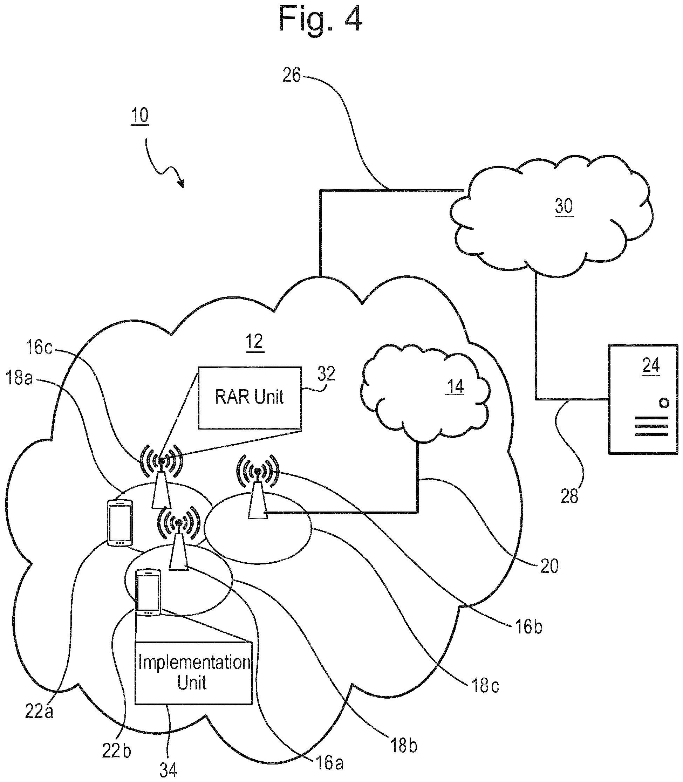

Returning to the drawing figures, in which like elements are referred to by like reference numerals, there is shown in FIG. 4 a schematic diagram of a communication system, according to an embodiment, including a communication system 10, such as a 3GPP-type cellular network, which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device 22a located in coverage area 18a is configured to wirelessly connect to, or be paged by, the corresponding network node 16c. A second wireless device 22b in coverage area 18b is wirelessly connectable to the corresponding network node 16a. While a plurality of wireless devices 22a, 22b (collectively referred to as wireless devices 22) are illustrated in this example, the disclosed embodiments are equally applicable to a situation where a sole wireless device is in the coverage area or where a sole wireless device is connecting to the corresponding network node 16. Note that although only two wireless devices 22 and three network nodes 16 are shown for convenience, the communication system may include many more wireless devices 22 and network nodes 16.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 4 as a whole enables connectivity between one of the connected wireless devices 22a, 22b and the host computer 24. The connectivity may be described as an over-the-top (OTT) connection. The host computer 24 and the connected wireless devices 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected wireless device 22a. Similarly, the network node 16 need not be aware of the future routing of an outgoing uplink communication originating from the wireless device 22a towards the host computer 24.

A network node 16 is configured to include a RAR unit 32 which is configured to transmits a Random Access Response, RAR, within a RAR window, as described herein. In one or more embodiments, a time length of the RAR window having been configured to correspond to a fraction or multiple of a slot in the frame.

A wireless device 22 is configured to include an implementation unit 34 which is configured to implement a Random Access Response, RAR, window, and receive a RAR based on the implemented RAR window, as described herein. In one or more embodiments, a time length of the RAR window being configurable to correspond to a fraction or multiple of a slot in the frame. In one or more embodiments, wireless device 22 is configured to include a determination unit 94 which is configured to determine the time length of the RAR window, as described herein.

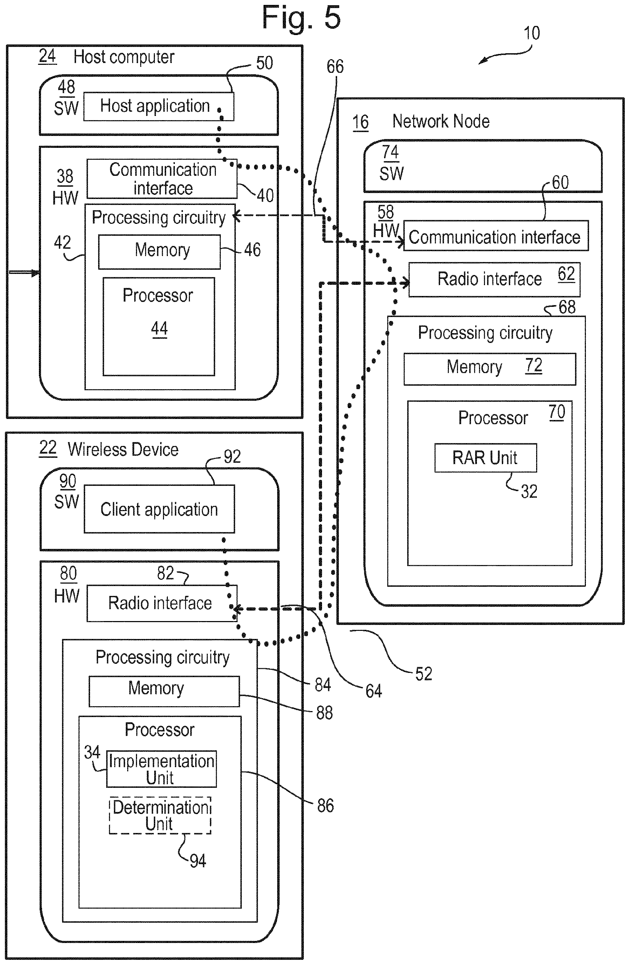

Example implementations, of the wireless device 22, network node 18 and host computer 24 discussed in the preceding paragraphs will now be described with reference to FIG. 5. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to a traditional processor and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a wireless device 22 connecting via an OTT connection 52 terminating at the wireless device 22 and the host computer 24. In providing the service to the remote user, the host application 50 may provide user data which is transmitted using the OTT connection 52. In one embodiment, the host computer 24 may be configured for providing control and functionality to a service provider and may be operated by the service provider or on behalf of the service provider.

The communication system 10 further includes a network node 16 provided in a communication system 10 and comprising hardware 58 enabling it to communicate with the host computer 24 and with the wireless device 22. The hardware 58 may include a communication interface 60 for setting up and maintaining a wired or wireless connection with an interface of a different communication device of the communication system 10, as well as a radio interface 62 for setting up and maintaining at least a wireless connection 64 with a wireless device 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the example shown, the hardware 58 of the network node 16 further includes processing circuitry 68. The processing circuitry 68 may include a processor 70 and a memory 72. In particular, in addition to a traditional processor and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include RAR unit 32 configured to transmits a Random Access Response, RAR, within a RAR window, a time length of the RAR window having been configured to correspond to a fraction or multiple of a slot in the frame.

The communication system 10 further includes the wireless device 22 already referred to. The wireless device 22 may have hardware 80 that may include a radio interface 82 configured to set up and maintain a wireless connection 64 with a network node 16 serving a coverage area 18 in which the wireless device 22 is currently located. The radio interface 82 may be formed as or may include, for example, one or more RF transmitters, one or more RF receivers, and/or one or more RF transceivers.

The hardware 80 of the wireless device 22 further includes processing circuitry 84. The processing circuitry 84 may include a processor 86 and memory 88. In particular, in addition to a traditional processor and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the wireless device 22 may further comprise software 90, which is stored in, for example, memory 88 at the wireless device 22, or stored in external memory (e.g., database) accessible by the wireless device 22. The software 90 may be executable by the processing circuitry 84. The software 90 may include a client application 92. The client application 92 may be operable to provide a service to a human or non-human user via the wireless device 22, with the support of the host computer 24. In the host computer 24, an executing host application 50 may communicate with the executing client application 92 via the OTT connection 52 terminating at the wireless device 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

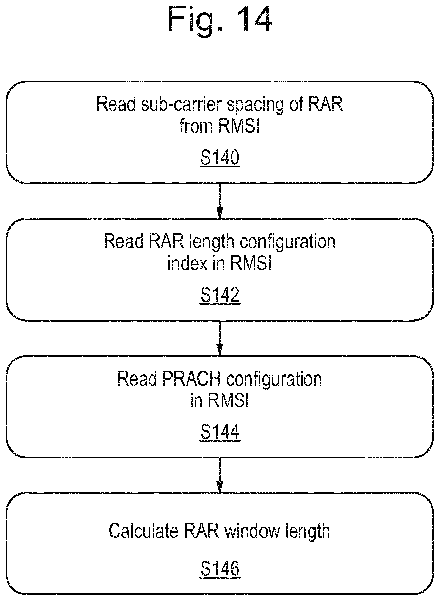

The processing circuitry 84 may be configured to control any of the methods and/or processes described herein and/or to cause such methods, and/or processes to be performed, e.g., by wireless device 22. The processor 86 corresponds to one or more processors 86 for performing wireless device 22 functions described herein. The wireless device 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to wireless device 22. For example, the processing circuitry 84 of the wireless device 22 may include an implementation unit 34 configured to implement a Random Access Response, RAR, window, a time length of the RAR window being configurable to correspond to a fraction or multiple of a slot in the frame; and receive a RAR using the implemented RAR window. For example, in one or more embodiments, the processing circuitry 84 of the wireless device 22 may include a determination unit 94 configured to determine the time length of the RAR window as described herein such as with respect to FIG. 14.

In some examples, the inner workings of the network node 16, wireless device 22, and host computer 24 may be as shown in FIG. 5 and independently, the surrounding network topology may be that of FIG. 4. Although FIGS. 4 and 5 show various "units" such as implementation unit 34, determination unit 94 and RAR unit 32 as being within a respective processor, it is contemplated that these units may be implemented such that a portion of the unit is stored in a corresponding memory within the processing circuitry. In other words, the units may be implemented in hardware or in a combination of hardware and software within the processing circuitry.

In FIG. 5, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the wireless device 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the wireless device 22 and the network node 16 is in accordance with the teachings of the embodiments described throughout this disclosure. One or more of the various embodiments improve the performance of OTT services provided to the wireless device 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some examples, a measurement procedure may be provided for the purpose of monitoring data rate, latency and other factors on which the one or more embodiments improve. There may further be an optional network functionality for reconfiguring the OTT connection 52 between the host computer 24 and wireless device 22, in response to variations in the measurement results. The measurement procedure and/or the network functionality for reconfiguring the OTT connection 52 may be implemented in the software 48 of the host computer 24 or in the software 90 of the wireless device 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary wireless device signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors etc.

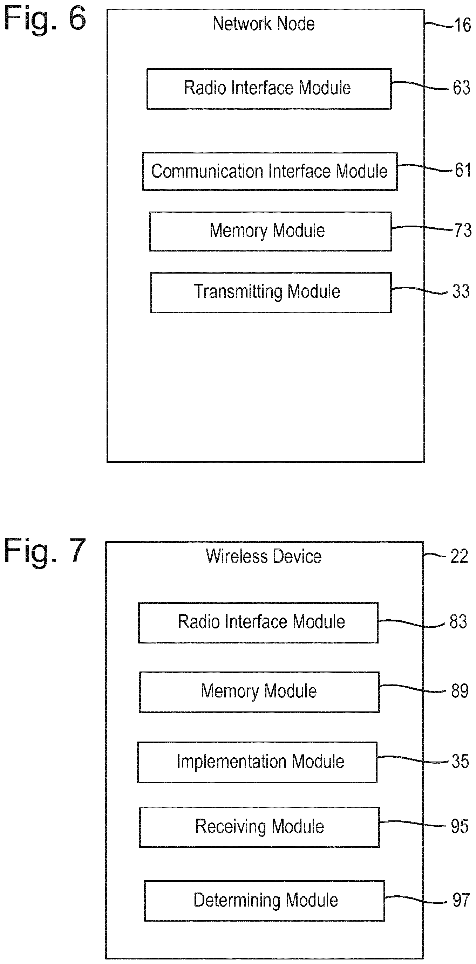

FIG. 6 is a block diagram of an alternative network node 16, which may be implemented at least in part by software modules containing software executable by a processor to perform the functions described herein. The network node 16 includes a radio interface module 63 configured for setting up and maintaining at least a wireless connection 64 with a wireless device 22 located in a coverage area 18 served by the network node 16. The network node 16 also includes a communication interface module 61 configured for setting up and maintaining a wired or wireless connection with an interface of a different communication device of the communication system 10. The communication interface module 61 may also be configured to facilitate a connection 66 to the host computer 24. The memory module 73 that is configured to store data, programmatic software code and/or other information described herein. The transmitting module 33 is configured to transmits a Random Access Response, RAR, within a RAR window, a time length of the RAR window having been configured to correspond to a fraction or multiple of a slot in the frame, as described herein.

FIG. 7 is a block diagram of an alternative wireless device 22, which may be implemented at least in part by software modules containing software executable by a processor to perform the functions described herein. The wireless device 22 includes a radio interface module 83 configured to set up and maintain a wireless connection 64 with a network node 16 serving a coverage area 18 in which the wireless device 22 is currently located. The memory module 89 is configured to store data, programmatic software code and/or other information described herein. The implementation module 35 is configured to implement a Random Access Response, RAR, window, a time length of the RAR window being configurable to correspond to a fraction or multiple of a slot in the frame, as described herein. The receiving module 95 is configured to receive a RAR using the implemented RAR window, as described herein. The determining module 97 is configured to determine a time length of the RAR window, as described herein.

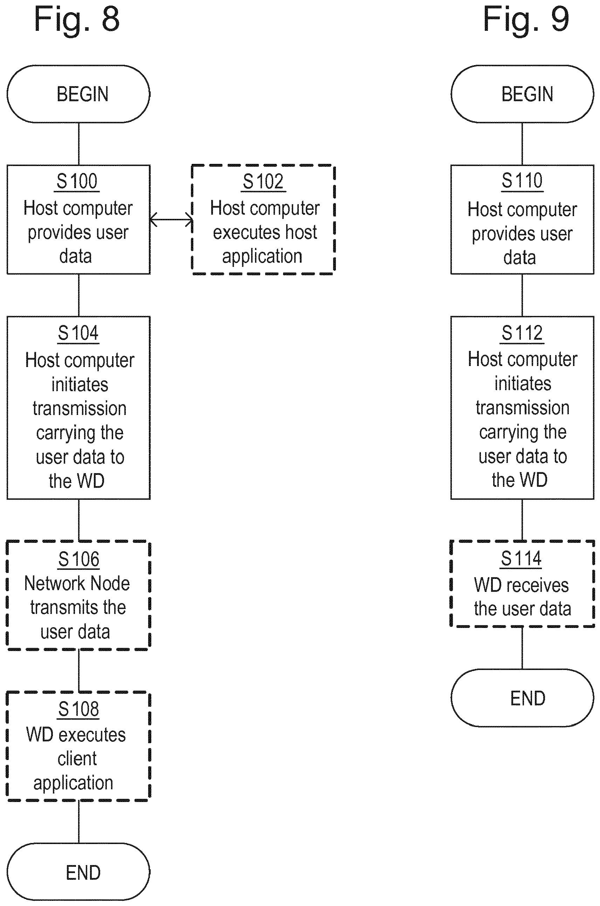

FIG. 8 is a flowchart illustrating an exemplary method implemented in a communication system, such as, for example, the communication system of FIGS. 4 and 5, in accordance with one embodiment. The communication system may include a host computer 24, a network node 16 and a wireless device 22, which may be those described with reference to FIG. 5. In a first step of the method, the host computer 24 provides user data (Block S100). In an optional substep of the first step, the host computer 24 provides the user data by executing a host application, such as, for example, the host application 74 (Block S102). In a second step, the host computer 24 initiates a transmission carrying the user data to the wireless device 22 (Block S104). In an optional third step, the network node 16 transmits to the wireless device 22 the user data which was carried in the transmission that the host computer 22 initiated, in accordance with the teachings of the embodiments described throughout this disclosure (Block S106). In an optional fourth step, the wireless device 22 executes a client application, such as, for example, the client application 114, associated with the host application 74 executed by the host computer 24 (Block S108).

FIG. 9 is a flowchart illustrating an exemplary method implemented in a communication system, such as, for example, the communication system of FIG. 4, in accordance with one embodiment. The communication system may include a host computer 24, a network node 16 and a wireless device 22, which may be those described with reference to FIGS. 4 and 5. In a first step of the method, the host computer 24 provides user data (Block S110). In an optional substep (not shown) the host computer 24 provides the user data by executing a host application, such as, for example, the host application 74. In a second step, the host computer 24 initiates a transmission carrying the user data to the wireless device 22 (Block S112). The transmission may pass via the network node 16, in accordance with the teachings of the embodiments described throughout this disclosure. In an optional third step, the wireless device 22 receives the user data carried in the transmission (Block S114).

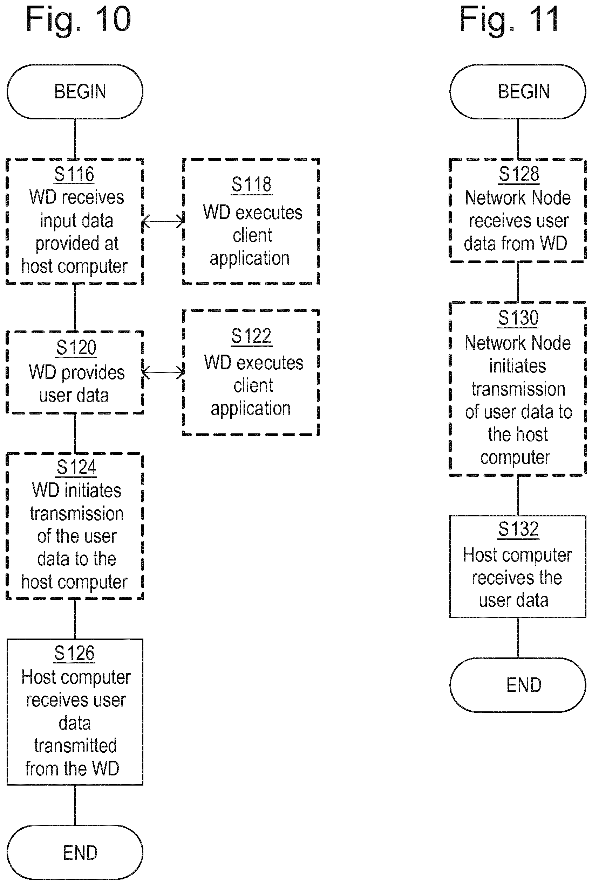

FIG. 10 is a flowchart illustrating an exemplary method implemented in a communication system, such as, for example, the communication system of FIG. 4. The communication system may include a host computer 24, a network node 16 and a wireless device 22, which may be those described with reference to FIGS. 4 and 5. In an optional first step of the method, the wireless device 22 receives input data provided by the host computer 24 (Block S116). In an optional substep of the first step, the wireless device 22 executes the client application 114, which provides the user data in reaction to the received input data provided by the host computer 24 (Block S118). Additionally or alternatively, in an optional second step, the wireless device 22 provides user data (Block S120). In an optional substep of the second step, the wireless device provides the user data by executing a client application, such as, for example, client application 114 (Block S122). In providing the user data, the executed client application 114 may further consider user input received from the user. Regardless of the specific manner in which the user data was provided, the wireless device 22 may initiate, in an optional third substep, transmission of the user data to the host computer 24 (Block S124). In a fourth step of the method, the host computer 24 receives the user data transmitted from the wireless device 22, in accordance with the teachings of the embodiments described throughout this disclosure (Block S126).

FIG. 11 is a flowchart illustrating an exemplary method implemented in a communication system, such as, for example, the communication system of FIG. 4. The communication system may include a host computer 24, a network node 16 and a wireless device 22, which may be those described with reference to FIGS. 4 and 5. In an optional first step of the method, in accordance with the teachings of the embodiments described throughout this disclosure, the network node 16 receives user data from the wireless device 22 (Block S128). In an optional second step, the network node 16 initiates transmission of the received user data to the host computer 24 (Block S130). In a third step, the host computer 24 receives the user data carried in the transmission initiated by the network node 16 (Block S132).

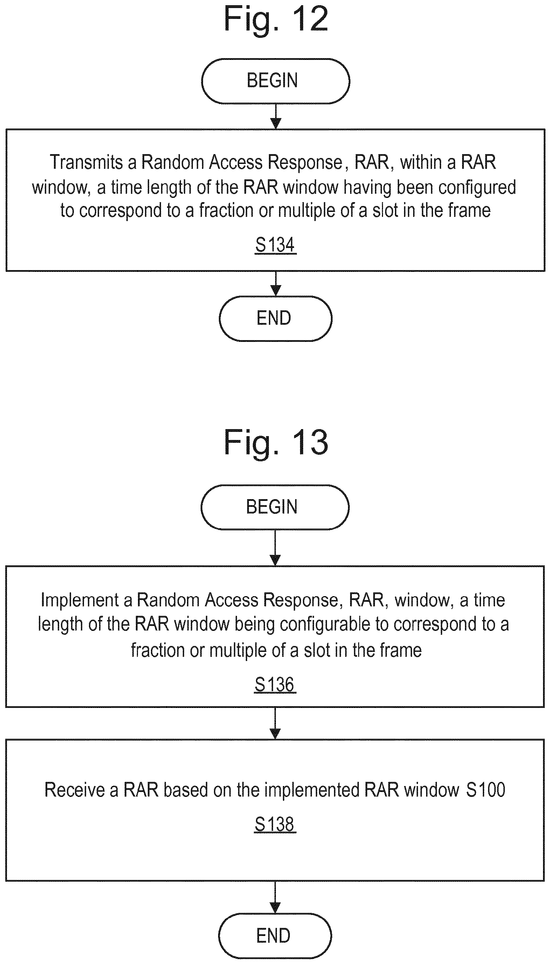

FIG. 12 is a flowchart of an exemplary process in a network node 16 for transmitting a RAR in accordance with the principles of the disclosure. Processing circuitry 68 is configured to transmit a Random Access Response, RAR, within a RAR window (Block S134). In one or more embodiments, a time length of the RAR window has been configured to correspond to a fraction or multiple of a slot in the frame.

FIG. 13 is a flowchart of an exemplary process in a wireless device 22 for implementing a RAR window for receiving a RAR in accordance with the principles of the disclosure. Processing circuitry 84 is configured to implement a Random Access Response, RAR, window (Block S136). In one or more embodiments, a time length of the RAR window being configurable to correspond to a fraction or multiple of a slot in the frame. Processing circuitry 84 is configured to receive a RAR using the implemented RAR window (Block S138).

The RAR window may be specified in terms of slots such that the length of the window, in seconds, is adjusted towards the sub-carrier spacing specified for RAR. The RAR window length may be ½ slot. PRACH preambles might be configured in every slot or subframe. There are some short preamble formats with few OFDM symbols. With this configuration, a new PRACH preamble and new RAR window are in every slot. In another embodiment, the minimum RAR window length is less than ½ slot.

FIG. 14 is a flowchart of an exemplary process in a wireless device 22 for determining the RAR window in accordance with the principles of the disclosure. For example, in processing circuitry 84 determines or calculates the RAR window length, i.e., time length of the RAR window. Processing circuitry 84 is configured to read sub-carrier spacing of RAR from RMSI, as described herein (Block S140). Processing circuitry 84 is configured to read RAR length configuration index from RMSI as described herein (Block S142). Processing circuitry 84 is configured to read PRACH configuration in RMSI, as described herein (Block S144). Processing circuitry 84 is configured to determine/calculate the RAR window length, i.e., time length of the RAR window, as described herein (Block S146). In one or more embodiments, the RAR window length is calculated based on one or more of Blocks S140-S144. In particular, the following information extracted from RMSI may be used for calculating the RAR window length:

1. Sub-carrier spacing of RAR;
2. RAR length configuration index;
3. PRACH configuration.

In one or more embodiments, only one or a subset of information items (1)-(3) are used. The following are examples of a single or a combination of parameters that can be used to calculate the time length of the RAR window:

- 1+2+3
- 1+2
- 1+3
- 2+3
- 1
- 2
- 3

In one embodiment, a configuration of minimum RAR window is dependent on PRACH preamble format. For example, a window of ½ slot, i.e., very short window, is used for PRACH preamble formats A0, A1, and B1 (small cell). For the rest of the formats, a longer minimum, and also a longer maximum length, is supported. In one embodiment, the short RAR window length of ½ slot is selected for PRACH format A0. In one embodiment, the short RAR window length of ½ slot is selected for PRACH formats A0, A1, A2, B1 and B2. In one embodiment, the short RAR window length of ½ slot is selected for PRACH formats A0, A1, A2, A3, B1, B2 and B3.

For example, in one or more embodiments, if PRACH formats are A0, A1, B1, the smallest/minimum RAR window length of ½ slot, is configured. Else, the smallest/minimum RAR window length of 1 slot is configured.

FIG. 15 is a block diagram of SSB positions within slots, RAR window of ½ slot, RAR and PRACH preamble from the same wireless device in two consecutive slots in accordance with the principles of the disclosure.

An illustration is given in FIG. 15 of a PRACH preamble with format A0 transmitted in slot n, and a RAR transmitted within a RAR window of ½ slot. The wireless device can then transmit a new PRACH preamble in slot n+1. Here, the wireless device may transmit PRACH preamble in two consecutive slots. A timing gap X of 1 OFDM symbol between the end of Msg1 (PRACH preamble) transmission and the starting position of the RAR window is used in FIG. 15. Also, the RAR is assumed to be placed in the same OFDM symbols within a slot as an SSB for 15, 30 or 120 kHz sub-carrier spacings. Furthermore, the RAR is transmitted by using a mini-slot of 4 OFDM symbols. Other placements of mini slots for RAR possible.

The processing time at the network node, e.g., gNB, is accommodated in the RAR window length. This will impact the maximum RAR window length, but is not any issue if at least the same RAR window length as in LTE is supported.

In NR, network node processing time for detecting PRACH preamble and preparing RAR, should be accounted for in the length of RAR window. Here, a long RAR window can be used for a network node associated with a long processing time. The start of the RAR window do not have to be adjusted, but will be unused when the RAR is transmitted late in the RAR window. Having a long RAR window is beneficial from the network node perspective as it gives the network node large flexibility when to schedule RAR but may not be beneficial from the perspective of latency of the RACH procedure. Having a short RAR window is beneficial for the latency of the average RACH procedure (even in case of failures of PRACH preambles in first attempts) but this short RAR window will imply requirements on the network node to process PRACH preambles faster and send RAR.

The number or PRACH preambles can be configured to be higher than in LTE. If that is the case, then the number of wireless devices that can be supported in a cell can be higher than in LTE. If so, then the number of RARs that can be handled at a given time might be increased, which would affect the RAR window length. Thus, in NR a longer RAR window than what would have been in LTE can be implemented, in high capacity cells with many wireless devices. The maximum RAR window length need support of at least 10 slots.

A number of different RAR windows can then be specified where the configurations can range between 0.5 slots up to more than 10 slots.

The RAR window length configurations may be {0.5, 1, 2, 4, 8, 16, 32} slots, where the length of the slot is determined by the RAR numerology as indicated in RMSI. This allows for adjustment for larger capacity in NR as compared to LTE.

In order to limit the maximum number of slots included in the RA-RNTI, the maximum RAR window length can be limited. The maximum RAR window may be limited to 10 ms. Thus, the RAR window candidates can be formulated as

- The RAR window length configurations are {0.5, 1, 2, 4, 8, 16, 32} slots where the length of the slot is determined by the sub-carrier spacing of RAR, and where the maximum length of the RAR window is one frame (i.e. 10 ms).

The RA-RNTI can be calculated as follows:

$$RA\text{-}RNTI = 1 + slot\_id + X^* SSB\_index + X^*Y^*n\_(R,RA) + X^*Y^*Z^*f\_id$$

where

- X=80, i.e. a design which supports at least 80 slots per frame corresponding to 120 kHz SCS in uplink and maximum RAR window length of one frame. If the maximum RAR window length is larger than 10 ms, then this value of X is increased.
- Y=64, i.e. the number of SSBs per SSB burst set
- Z= the maximum number of MSB bits of the preamble index to be included in RA-RNTI.

Other values of the maximum length may be used, for example 20, 30 or 40 ms. The RAR window length may also be shorter than 0.5 slots, e.g. to enable more than one PRACH preamble transmission per slot, i.e. a possibility to retransmit without having to wait for the entire slot to expire. The RAR window size may then be expressed in terms of units of e.g. 1/7 or 1/14 slots (2 or 1 OFDM symbols). The slot length may be assumed to be 0.5 ms where the time length of the RAR window is based on fraction, portion and/or multiple of this slot length.

The disclosure describes functions in terms of the wireless device actions for determining the RAR reception window length. The wireless device also attempts to receive a RAR transmission during that time window. Network node may be configured to obtain the same information (one or more of RAR numerology, the PRACH preamble format mandated by it in the SSB and/or received form the UE, and/or the window configuration parameter), determines the RAR transmission window in relation to the received PRACH preamble timing, and transmits the RAR during the determined window. For example, network node is configured with determination unit 94.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

In addition, unless mention was made above to the contrary, it should be noted that all of the accompanying drawings are not to scale.

## Claims

1.  A wireless device , WD, (22) configured to communicate with a network node, the wireless device (22) comprising a radio interface and processing circuitry configured to:

    implement a Random Access Response, RAR, window, a time length of the RAR window being configurable to correspond to a fraction or multiple of a slot in a frame and wherein the time length of the RAR window is based on a Physical Random Access Channel, PRACH, preamble format;
    wherein the time length of the RAR window is a minimum time length and the minimum time length is less than a slot duration; and
    receive a RAR using the implemented RAR window.

2.  The wireless device (22) of Claim 1, wherein a time length of the slot is predefined based on the PRACH preamble format.

3.  The wireless device (22) of any one of Claims 1-2, wherein at least one PRACH format corresponds to the time length of the slot of 1/2 slot.

4.  The wireless device (22) of any one of Claims 1-3, wherein the processing circuitry is further configured to determine the time length of the RAR window.

5.  The wireless device (22) of any one of Claims 1-4, wherein a maximum time length of the RAR window is one frame; and wherein the maximum time length of the RAR window is taken from a group of 1/7 slot, 1/14, slot, 1/2 slot, 1 slot, 2, slots, 4 slots, 8 slots, 16 slots and 32 slots.

6.  The wireless device (22) of any one of Claims 1-5, where the length of the slot is based on the sub-carrier spacing of the RAR.

7. A method implemented in a wireless device, WD, (22) configured to communicate with a network node (16), the method comprising:

implementing (S136) a Random Access Response, RAR, window, a time length of the RAR window being configurable to correspond to a fraction or multiple of a slot in a frame, and wherein the time length of the RAR window is based on a Physical Random Access Channel, PRACH, preamble format;
wherein the time length of the RAR window is a minimum time length and the minimum time length is less than a slot duration; and
receiving (S138) a RAR using the implemented RAR window.

8. A network node (16) configured to communicate with a wireless device (22), the network node (16) comprising a radio interface and processing circuitry configured to:

transmit a Random Access Response, RAR, within a RAR window, a time length of the RAR window having been configured to correspond to a fraction or multiple of a slot in a frame, wherein the time length of the RAR window is based on a Physical Random Access Channel, PRACH, preamble format; and
wherein the time length of the RAR window is a minimum time length and the minimum time length is less than a slot duration.

9. The network node (16) of Claim 8, wherein a time length of the slot is predefined based on the PRACH preamble format.

10. The network node (16) of any one of Claims 8-9, wherein a maximum time length of the RAR window is one frame; and wherein the maximum time length of the RAR window is taken from a group of 1/7 slot, 1/14, slot, 1/2 slot, 1 slot, 2, slots, 4 slots, 8 slots, 16, slots and 32 slots.

11. The network node (16) of any one of Claims 8-10, wherein the length of the slot is based on the sub-carrier spacing of RAR.

12. A method implemented in a network node (16) configured to communicate with a wireless device (22), the method comprising:

transmitting (S134) a Random Access Response, RAR, within a RAR window, a time length of the RAR window having been configured to correspond to a fraction or multiple of a slot in a frame, wherein the time length of the RAR window is based on a Physical Random Access Channel, PRACH, preamble format, and
wherein the time length of the RAR window is a minimum time length and the minimum time length is less than a slot duration.

**Patentansprüche**

1. Drahtlosvorrichtung, WD, (22), die dazu konfiguriert ist, mit einem Netzwerkknoten zu kommunizieren, wobei die Drahtlosvorrichtung (22) eine Funkschnittstelle und eine Verarbeitungsschaltung umfasst, die zu Folgendem konfiguriert sind:

Umsetzen eines Direktzugriffantwortfensters, RAR-Fensters, wobei eine Zeitlänge des RAR-Fensters dazu konfigurierbar ist, einem Anteil oder einem Vielfachen eines Schlitzes in einem Rahmen zu entsprechen, und wobei die Zeitlänge des RAR-Fensters auf einem Präambelformat eines physischen Direktzugriffskanals, PRACH-Präambelformat, basiert;
wobei die Zeitlänge des RAR-Fensters eine minimale Zeitlänge ist und die minimale Zeitlänge kleiner als eine Schlitzdauer ist; und
Empfangen einer RAR unter Verwendung des umgesetzten RAR-Fensters.

2. Drahtlosvorrichtung (22) nach Anspruch 1, wobei eine Zeitlänge des Schlitzes basierend auf dem PRACH-Präambelformat vordefiniert ist.

3. Drahtlosvorrichtung (22) nach einem der Ansprüche 1-2, wobei mindestens ein PRACH-Format der Zeitlänge des Schlitzes von 1/2 Schlitzen entspricht.

4. Drahtlosvorrichtung (22) nach einem der Ansprüche 1-3, wobei die Verarbeitungsschaltung ferner dazu konfiguriert ist, die Zeitlänge des RAR-Fensters zu bestimmen.

5. Drahtlosvorrichtung (22) nach einem der Ansprüche 1-4, wobei eine maximale Zeitlänge des RAR-Fenster ein Rahmen ist; und wobei die maximale Zeitlänge des RAR-Fensters aus einer Gruppe aus 1/7 Schlitzen, 1/14 Schlitzen, 1/2 Schlitzen, 1 Schlitz, 2 Schlitzen, 4 Schlitzen, 8 Schlitzen, 16 Schlitzen und 32 Schlitzen entnommen ist.

6. Drahtlosvorrichtung (22) nach einem der Ansprüche 1-5, wobei die Länge des Schlitzes auf einer Unterträgerbeabstandung der RAR basiert.

7. Verfahren, das in einer Drahtlosvorrichtung, WD, (22) umgesetzt ist, die dazu konfiguriert ist, mit einem Netzwerkknoten (16) zu kommunizieren, wobei das Verfahren Folgendes umfasst:

Umsetzen (S136) eines Direktzugriffantwortfensters, RAR-Fensters, wobei eine Zeitlänge des RAR-Fensters dazu konfigurierbar ist, einem Anteil oder einem Vielfachen eines Schlitzes in einem Rahmen zu entsprechen, und wobei die Zeitlänge des RAR-Fensters auf einem Präambelformat eines physischen Direktzugriffskanals, PRACH-Präambelformat, basiert;
wobei die Zeitlänge des RAR-Fensters eine minimale Zeitlänge ist und die minimale Zeitlänge kleiner als eine Schlitzdauer ist; und
Empfangen (S138) einer RAR unter Verwendung des umgesetzten RAR-Fensters.

8. Netzwerkknoten (16), der dazu konfiguriert ist, mit einer Drahtlosvorrichtung (22) zu kommunizieren, wobei der Netzwerkknoten (16) eine Funkschnittstelle und eine Verarbeitungsschaltung umfasst, die zu Folgendem konfiguriert sind:

Übertragen einer Direktzugriffantwort, RAR, innerhalb eines RAR-Fensters, wobei eine Zeitlänge des RAR-Fensters dazu konfiguriert wurde, einem Anteil oder einem Vielfachen eines Schlitzes in einem Rahmen zu entsprechen, wobei die Zeitlänge des RAR-Fensters auf einem Präambelformat eines physischen Direktzugriffskanals, PRACH-Präambelformat, basiert; und
wobei die Zeitlänge des RAR-Fensters eine minimale Zeitlänge ist und die minimale Zeitlänge kleiner als eine Schlitzdauer ist.

9. Netzwerkknoten (16) nach Anspruch 8, wobei eine Zeitlänge des Schlitzes basierend auf dem PRACH-Präambelformat vordefiniert ist.

10. Netzwerkknoten (16) nach einem der Ansprüche 8-9, wobei eine maximale Zeitlänge des RAR-Fenster ein Rahmen ist; und wobei die maximale Zeitlänge des RAR-Fensters aus einer Gruppe aus 1/7 Schlitzen, 1/14 Schlitzen, 1/2 Schlitzen, 1 Schlitz, 2 Schlitzen, 4 Schlitzen, 8 Schlitzen, 16 Schlitzen und 32 Schlitzen entnommen ist.

11. Netzwerkknoten (16) nach einem der Ansprüche 8-10, wobei die Länge des Schlitzes auf einer Unterträgerbeabstandung der RAR basiert.

12. Verfahren, das in einem Netzwerkknoten (16) umgesetzt ist, der dazu konfiguriert ist, mit einer Drahtlosvorrichtung (22) zu kommunizieren, wobei das Verfahren Folgendes umfasst:

Übertragen (S134) einer Direktzugriffantwort, RAR, innerhalb eines RAR-Fensters, wobei eine Zeitlänge des RAR-Fensters dazu konfiguriert wurde, einem Anteil oder einem Vielfachen eines Schlitzes in einem Rahmen zu entsprechen, wobei die Zeitlänge des RAR-Fensters auf einem Präambelformat eines physischen Direktzugriffskanals, PRACH-Präambelformat, basiert; und
wobei die Zeitlänge des RAR-Fensters eine minimale Zeitlänge ist und die minimale Zeitlänge kleiner als eine Schlitzdauer ist.

## Revendications

1. Dispositif sans fil, WD, (22) configuré pour communiquer avec un noeud de réseau, le dispositif sans fil (22) comprenant une interface radio et des circuits de traitement configurés pour :

mettre en oeuvre une fenêtre de réponse d'accès aléatoire, RAR, une durée de la fenêtre RAR étant configurable pour correspondre à une fraction ou à un multiple d'un créneau dans une trame et dans lequel la durée de la fenêtre RAR est basée sur un format de préambule de canal d'accès aléatoire physique, PRACH ;

dans lequel la durée de la fenêtre RAR est une durée minimale et la durée minimale est inférieure à une durée de créneau ; et

recevoir une RAR en utilisant la fenêtre RAR mise en oeuvre.

2. Dispositif sans fil (22) selon la revendication 1, dans lequel une durée du créneau est prédéfinie sur la base du format de préambule PRACH.

3. Dispositif sans fil (22) selon l'une quelconque des revendications 1 à 2, dans lequel au moins un format PRACH correspond à la durée du créneau de 1/2 créneau.

4. Dispositif sans fil (22) selon l'une quelconque des revendications 1 à 3, dans lequel les circuits de traitement sont en outre configurés pour déterminer la durée de la fenêtre RAR.

5. Dispositif sans fil (22) selon l'une quelconque des revendications 1 à 4, dans lequel une durée maximale de la fenêtre RAR est une trame ; et dans lequel la durée maximale de la fenêtre RAR est tirée d'un groupe de 1/7 de créneau, 1/14 de créneau, 1/2 créneau, 1 créneau, 2 créneaux, 4 créneaux, 8 créneaux, 16 créneaux et 32 créneaux.

6. Dispositif sans fil (22) selon l'une quelconque des revendications 1 à 5, dans lequel la longueur de fente est basée sur l'espacement de sous-porteuse de la RAR.

7. Procédé mis en oeuvre dans un dispositif sans fil, WD, (22) configuré pour communiquer avec un noeud de réseau (16), le procédé comprenant :

la mise en oeuvre (S136) d'une fenêtre de réponse d'accès aléatoire, RAR, une durée de la fenêtre RAR étant configurable pour correspondre à une fraction ou un multiple d'un créneau dans une trame, et dans lequel la durée de la fenêtre RAR est basée sur un format de préambule de canal d'accès aléatoire, PRACH ;

dans lequel la durée de la fenêtre RAR est une durée minimale et la durée minimale est inférieure à une durée de créneau ; et

la réception (S138) d'une RAR en utilisant la fenêtre RAR mise en oeuvre.

8. Noeud de réseau (16) configuré pour communiquer avec un dispositif sans fil (22), le noeud de réseau (16) comprenant une interface radio et des circuits de traitement configurés pour :

transmettre une réponse d'accès aléatoire, RAR, dans une fenêtre RAR, une durée de la fenêtre RAR ayant été configurée pour correspondre à une fraction ou un multiple d'un créneau dans une trame, dans lequel la durée de la fenêtre RAR est basée sur un format de préambule de canal d'accès aléatoire, PRACH ; et

dans lequel la durée de la fenêtre RAR est une durée minimale et la durée minimale est inférieure à une durée de créneau.

9. Noeud de réseau (16) selon la revendication 8, dans lequel une durée du créneau est prédéfinie sur la base du format de préambule PRACH.

10. Noeud de réseau (16) selon l'une quelconque des revendications 8 à 9, dans lequel une durée maximale de la fenêtre RAR est une trame ; et dans lequel la durée maximale de la fenêtre RAR est tirée d'un groupe de 1/7 de créneau, 1/14 de créneau, 1/2 créneau, 1 créneau, 2 créneaux, 4 créneaux, 8 créneaux, 16, créneaux et 32 créneaux.

11. Noeud de réseau (16) selon l'une quelconque des revendications 8 à 10, dans lequel la longueur du créneau est basée sur l'espacement de sous-porteuse de RAR.

12. Procédé mis en oeuvre dans un noeud de réseau (16) configuré pour communiquer avec un dispositif sans fil (22), le procédé comprenant :

la transmission (S134) d'une réponse d'accès aléatoire, RAR, dans une fenêtre RAR, une durée de la fenêtre RAR ayant été configurée pour correspondre à une fraction ou un multiple d'un créneau dans une trame, dans lequel la durée de la fenêtre RAR est basée sur un format de préambule de canal d'accès aléatoire physique, PRACH, et
dans lequel la durée de la fenêtre RAR est une durée minimale et la durée minimale est inférieure à une durée de créneau.

Fig. 1

SS-block (NR-PSS, NR-SSS, NR-PBCH)

Broadcasted system information

PRACH (Physical Random Access Channel)

RAR (Random Access Response)

PUSCH (Physical Uplink Shared Channel)

CRM (Contention Resolution Message)

# Fig. 2

EP 3 711 432 B1

# Fig. 3

# Fig. 4

# Fig. 5

## Fig. 6

**Network Node** — 16

Radio Interface Module — 63

Communication Interface Module — 61

Memory Module — 73

Transmitting Module — 33

## Fig. 7

**Wireless Device** — 22

Radio Interface Module — 83

Memory Module — 89

Implementation Module — 35

Receiving Module — 95

Determining Module — 97

# Fig. 8

BEGIN

S100
Host computer
provides user
data

S102
Host computer
executes host
application

S104
Host computer
initiates
transmission
carrying the
user data to
the WD

S106
Network Node
transmits the
user data

S108
WD executes
client
application

END

# Fig. 9

BEGIN

S110
Host computer
provides user
data

S112
Host computer
initiates
transmission
carrying the
user data to
the WD

S114
WD receives
the user data

END

# Fig. 10

BEGIN

S116
WD receives
input data
provided at
host computer

S118
WD executes
client
application

S120
WD provides
user data

S122
WD executes
client
application

S124
WD initiates
transmission
of the user
data to the
host computer

S126
Host computer
receives user
data
transmitted
from the WD

END

# Fig. 11

BEGIN

S128
Network Node
receives user
data from WD

S130
Network Node
initiates
transmission
of user data to
the host
computer

S132
Host computer
receives the
user data

END

# Fig. 12

```
( BEGIN )
    |
    v
┌─────────────────────────────────────────────────┐
│                                                 │
│  Transmits a Random Access Response, RAR, within a RAR  │
│  window, a time length of the RAR window having been configured │
│  to correspond to a fraction or multiple of a slot in the frame │
│                                                 │
│                   S134                          │
│                                                 │
└─────────────────────────────────────────────────┘
    |
    v
  ( END )
```

# Fig. 13

```
( BEGIN )
    |
    v
┌─────────────────────────────────────────────────┐
│                                                 │
│  Implement a Random Access Response, RAR, window, a time │
│  length of the RAR window being configurable to correspond to a │
│  fraction or multiple of a slot in the frame    │
│                                                 │
│                   S136                          │
│                                                 │
└─────────────────────────────────────────────────┘
    |
    v
┌─────────────────────────────────────────────────┐
│                                                 │
│  Receive a RAR based on the implemented RAR window S100 │
│                                                 │
│                   S138                          │
│                                                 │
└─────────────────────────────────────────────────┘
    |
    v
  ( END )
```

# Fig. 14

Read sub-carrier spacing of RAR
from RMSI

S140

Read RAR length configuration
index in RMSI

S142

Read PRACH configuration
in RMSI

S144

Calculate RAR window length

S146

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NOKIA.** Remaining details on PRACH procedure. *RAN WG1, Prague, Czech Republic*